# EUROPÄISCHE PATENTSCHRIFT

(11) **EP 2 413 044 B1**
(45) Veröffentlichungstag und Bekanntmachung des Hinweises auf die Patenterteilung: **28.10.2015**
(21) Anmeldenummer: 10007975.5
(22) Anmeldetag: 30.07.2010
(51) Int. Cl.: F28F 27/00, F28D 7/00, F28D 20/00, F24H 9/14, F28D 9/00, F24D 3/10

(54) **Brauchwassererwärmungseinheit**
Domestic water heating unit
Unité de chauffage d'eau potable

(43) Veröffentlichungstag der Anmeldung: 01.02.2012
(73) Patentinhaber: Grundfos Management A/S, 8850 Bjerringbro (DK)
(72) Erfinder: Døssing, Bent, 8600 Silkeborg (DK); Jensen, Olav, 8800 Viborg (DK)
(74) Vertreter: Hemmer, Arnd

(56) Entgegenhaltungen:
- EP-A1- 0 453 080
- EP-A1- 2 093 517
- EP-A2- 0 568 122
- WO-A1-2006/059208
- CH-A- 278 109
- DE-U1-202007 003 454

## Beschreibung

Die Erfindung betrifft eine Brauchwassererwärmungseinheit gemäß dem Oberbegriff des Anspruchs 1.

Derartige Brauchwassererwärmungseinheiten werden in Heizungsanlagen eingesetzt, um Brauchwasser zu erwärmen, welchen dann beispielsweise an Waschbecken, Duschen, Badewannen als warmes Wasser zur Verfügung gestellt wird. Die Erwärmung kann beispielsweise in einem Brauchwasserspeicherbehälter oder aber über einen Wärmetauscher erfolgen. Ein solcher Wärmetauscher weist zwei Strömungswege auf, einen für das Heizmedium, d. h. üblicherweise das durch die Heizungsanlage strömende, vom Heizkessel erwärmte Wasser und einem zweiten Strömungsweg durch welchen das zu erwärmende Brauchwasser geleitet wird.

Die bekannten Wärmetauscher weisen entweder eine Mitstromanordnung auf, bei welcher die Strömungswege für das Brauchwasser und das Heizmedium gleich gerichtet sind oder aber eine Gegenstromanordnung, bei welcher die Strömungsrichtungen von Heizmedium und Brauchwasser entgegengesetzt gerichtet sind. Bei der Mitstromanordnung besteht der Nachteil, dass die Austrittsseite für das Heizmedium und das Brauchwasser am selben Ende des Wärmetauschers gelegen sind, sodass die maximale Temperatur für das zu erwärmende Brauchwasser maximal der Austrittstemperatur des abgekühlten Heizmediums aus dem Wärmetauscher entsprechen kann. In der Praxis wird die Temperatur darunter liegen. D. h. zum Erzielen hoher Brauchwassertemperaturen sind sehr hohe Temperaturen des Heizmediums auf der Eingangsseite seite des Wärmetauschers erforderlich. Mit der Gegenstromanordnung können höhere Austrittstemperaturen für das Brauchwasser erreicht werden, da der Austritt des erwärmten Brauchwassers und der Eintritt des Heizmediums auf derselben Seite des Wärmetauschers gelegen sind. D. h. das Brauchwasser wird im Wärmetauscher nahe der Austrittsseite durch das einströmende Heizmedium, d. h. das noch nicht abgekühlte Heizmedium erwärmt. Diese Anordnung hat jedoch wiederum den Nachteil, dass insbesondere bei geringen Brauchwasservolumenströmen eine zu hohe Austrittstemperatur des Brauchwassers auftreten kann. Neben einer Verbrühungsgefahr hat eine zu hohe Brauchwassertemperatur den Nachteil, dass es zu erhöhten Kalkablagerungen in Leitungen und Armaturen kommt.

DE 20 2007 003 454 U 1 zeigt ein modular aufgebautes Gasbrennwertgerät mit einem Brauchwasserkreislauf zur Erwärmung von Brauchwasser. Hierzu ist in dem Gerät in herkömmlicher Weise ein Plattenwärmetauscher vorgesehen. Bei diesem besteht das Problem, dass, je nachdem ob eine Mitstromanordnung oder eine Gegenstromanordnung gewählt ist, entweder sehr hohe Temperaturen des Heizmediums auf der Eingangsseite erforderlich sind, oder aber die Gefahr besteht, dass die Austrittstemperatur des Brauchwassers zu hoch ist. Dieses Dokument offenbart eine Brauchwassererwärmungseinheit gemäß dem Oberbegriff des Anspruchs 1. WO 2006/059208 A1 zeigt einen Wärmetauscher für ein Heizgerät zur Erwärmung von Brauchwasser. Dieser Wärmetauscher ist im Unterschied zum zuvor diskutierten Stand der Technik nicht als Plattenwärmetauscher ausgebildet, sondern als ein Behältnis, durch welche sich eine zweite gewundene Rohrleitung erstreckt. Jedoch besteht auch bei diesem Wärmetauscher die vorangehend beschriebene Problematik.

Im Hinblick auf diese Problematik ist es Aufgabe der Erfindung, eine verbesserte Brauchwassererwärmungseinheit bereitzustellen, welche zum einen eine ausreichende Erwärmung des Brauchwassers sicherstellt, zum anderen jedoch zu hohe Temperaturen des Brauchwassers sicher verhindern kann.

Diese Aufgabe wird durch eine Brauchwassererwärmungseinheit mit den im Anspruch 1 angegebenen Merkmalen gelöst. Bevorzugte Ausführungsformen ergeben sich aus den Unteransprüchen, der nachfolgenden Beschreibung sowie den beigefügten Figuren.

Die erfindungsgemäße Brauchwassererwärmungseinheit ist vorgesehen zur Verwendung in einer Heizungsanlage, d. h. insbesondere an oder in einem Wärmeerzeuger oder Wärmespeicher. Beispielsweise kann ein solcher Wärmetauscher an einem Heizkessel oder einem Speicher für erwärmtes Heizmedium angebracht werden. Eine solche Brauchwassererwörmungseinheit kann alle wesentlichen zur Brauchwassererwärmung erforderlichen Komponenten aufweisen und so eine vorgefertigte Baueinheit bilden, welche dann in eine Heizungsanlage oder ein Gebäude leicht integriert werden kann. Dabei müssen dann von der Brauchwassererwärmungseinheit lediglich noch Verbindungen zu der Heizungsanlage und ggf. den Rohrleitungen des Gebäudes hergestellt werden. Insbesondere enthält eine solche Brauchwassererwärmungseinheit einen Wärmetauscher mit den erforderlichen Anschlüssen sowie eine Umwälzpumpe zur Förderung von Heizmedium zu dem Wärmetauscher. Darüber hinaus können noch Sensoren, ggf. erforderliche Ventile und insbesondere eine Steuereinrichtung zur Steuerung der Brauchwassererwärmung in die Brauchwassererwärmungseinheit integriert sein, so dass diese über ihre Leitungsanschlüsse im Idealfall lediglich mit den externen Rohrleitungen und mit einer Stromversorgung verbunden werden muss. Die Leitungsanschlüsse beinhalten insbesondere einen Ein- und Ausgang für Heizmedium, einen Ein- und Ausgang für zu erwärmendes Brauchwasser und ggf. einen Anschluss für eine Brauchwasserzirkulationsleitung.

Die Brauchwassererwärmungseinheit weist zumindest einen Wärmetauscher auf, in welchem ein erster Strömungsweg für ein Heizmedium, beispielsweise Wasser, sowie ein zweiter Strömungsweg für das zu erwärmende Brauchwasser ausgebildet sind. Die beiden Strömungswege sind hydraulisch voneinander getrennt, jedoch in dem Wärmetauscher in bekannter Weise so zu einander geführt, dass ein möglichst guter Wärmeübergang von dem ersten Strömungsweg zu dem zweitem Strömungsweg möglich ist, um durch das heiße Heizmedium das Brauchwasser in dem zweiten Strömungsweg zu erwärmen.

Um die Nachteile bekannter Wärmetauscher in diesen Brauchwassererwärmungseinheiten auszuräumen ist erfindungsgemäß vorgesehen, die Strömungswege in einer Kombination von Gleich- und Gegenstrom zueinander anzuordnen. Dazu sind die beiden Strömungswege in einem ersten Abschnitt, in Strömungsrichtung des Brauchwassers gesehen, in einer Gegenstromanordnung geführt. D. h. in diesem Abschnitt strömen das Heizmedium in dem ersten Strömungsweg und das zu erwärmende Brauchwasser in dem zweiten Strömungsweg in entgegengesetzten Richtungen durch den Wärmetauscher. D. h. auf der Eintrittsseite des kalten, d. h. zu erwärmenden Brauchwasser, findet sich der Austritt für das abgekühlte Heizmedium. D. h. das eintretenden kalte Brauchwasser wird zunächst durch das bereits abgekühlte Heizmedium erwärmt und kommt im Verlauf seiner Strömung durch den Wärmetauscher aufgrund des Gegenstromes in wärmere Bereiche des Wärmetauschers, in denen das in entgegengesetzter Richtung fließende Heizmedium noch wärmer ist.

In einem sich stromaufwärts in Strömungsrichtung des Brauchwassers gesehen anschließenden zweiten Abschnitt des Wärmetauschers ändert sich die relative Anordnung des beiden Strömungswege zueinander von der Gegenstromanordnung zur Mitstromanordnung, d. h. die Ströme durch die Strömungswege verlaufen dann gleichgerichtet. D. h. im weiteren Verlauf der Strömung im zweiten Strömungsweg für das erwärmte Brauchwasser kommt dieses zunächst in den Bereich des eintretenden Heizmediums, d. h. in den Bereich der höchsten Temperatur des Heizmediums und fließt dann zu diesem gleichgerichtet, sodass der Austritt des zweiten Strömungsweges aus dem Wärmetauscher in einem Bereich des ersten Strömungsweges liegt, welcher vom Eintritt des ersten Strömungsweges beabstandet ist, sodass dort im Betrieb eine niedrigere Temperatur als die Eintrittstemperatur des Heizmediums gegeben ist. D. h. der Austritt für das Brauchwasser liegt nicht im heißesten Bereich des Wärmetauschers. Durch diese Strömungsführung mit der Umkehr vom Gegenstrom zum Mitstrom wird erreicht, dass zum einen eine höhere Austrittstemperatur des Brauchwassers erreicht werden kann als es im Mitstromprinzip möglich ist, d. h. insbesondere kann die Austrittstemperatur des Brauchwassers höher sein als die Austrittstemperatur des Heizmediums. Gleichzeitig kann jedoch verhindert werden, dass es zu einer zu hohen Temperatur des austretenden Brauchwassers kommt, da anders als im reinen Gegenstromprinzip das austretenden Brauchwasser auf einem Temperaturniveau deutlich unter dem Temperaturniveau des eintretenden Heizmediums gehalten werden kann, indem zum Austrittsende des zweiten Strömungsweges hin dieser eben nicht direkt am Eintrittsende des ersten Strömungsweges entlang geführt ist.

Erfindungsgemäß handelt es sich bei dem zumindest einem Wärmetauscher um einen Plattenwärmetauscher. Bei diesem sind die einzelnen Strömungswege durch Platten, vorzugsweise aus Metall voneinander getrennt. Ein solcher Wärmetauscher ist somit als Stapel voneinander beabstandeter Platten ausgebildet, wobei zwischen den Platten abwechselnd die ersten und zweiten Strömungswege ausgebildet sind. In einem solchen Wärmetauscher werden zum einen große Wärmeüber gangsflächen an den Platten bereitgestellt, zum anderen ist ein kostengünstiger und kompakter Aufbau möglich. Darüber hinaus bildet ein solcher Plattenwärmetauscher eine feste tragende Struktur, welche geeignet ist zur Anbringung weiterer Komponenten, wie beispielsweise Pumpen, Verteiler, Rohrleitungen und Ventile direkt am Plattenwärmetauscher, sodass dieser eine zentrale tragende Einheit der Brauchwassererwärmungseinheit darstellen kann.

Der erste Abschnitt der Strömungswege, d. h. in welchem die Gegenstromanordnung gegeben ist, macht vorzugsweise zwischen 50 % und 80 %, weiter bevorzugt zwischen 65 % und 75 % der Länge des zweiten Strömungsweges für das Brauchwasser aus. Der verbleibende Teil des zweiten Strömungsweges entfällt dann auf den Abschnitt, in welchem die Mitstromanordnung vorgesehen ist, sowie gegebenenfalls einen zwischen den Abschnitten gelegenen Übergangsbereich.

Der erste und der zweite Abschnitt der Strömungswege des zumindest einen Wärmetauschers können in einen einzigen Wärmetauscher integriert sein. Alternativ ist es auch möglich, zwei getrennte Wärmetauscher vorzusehen, wobei jeder Wärmetauscher einen ersten und eine zweiten Strömungsweg aufweist und durch den ersten Strömungsweg das Heizmedium und durch den zweiten Strömungsweg das Brauchwasser geführt wird. Dabei sind der erste und der zweite Wärmetauscher dann so miteinander verbunden, dass in dem ersten Wärmetauscher die beschriebene Gegenstromanordnung gewählt ist und in dem zweiten Wärmetauscher die Mitstromanordnung. D. h. der Wechsel vom Gegenstrom zum Mitstrom wird zwischen den beiden Wärmetauschern durch die entsprechende fluidleitende Verbindung realisiert. Auf diese Weise kann die erfindungsgemäße Wärmetauscheranordnung sehr leicht aus handelsüblichen Komponenten aufgebaut werden.

Zwischen dem ersten und dem zweiten Abschnitt ist in dem zumindest einen Wärmetauscher bevorzugt ein Umkehrabschnitt ausgebildet, in welchem der erste und/oder der zweite Strömungsweg so verlaufen, dass eine Richtungsumkehr relativ zu dem jeweils anderen Strömungsweg von Gegenstrom zu Mitstrom gegeben ist. Ein solcher Umkehrabschnitt kann entweder zwischen zwei getrennten Wärmetauschern durch die entsprechende fluidleitende Verbindung der Wärmetauscher oder aber in einem integrierten Wärmetauscher zwischen den beiden Abschnitten ausgebildet sein. Im Falle eines Plattenwärmetauschers kann dies durch Änderung der Verbindung der Freiräume zwischen den einzelnen Platten im Inneren des Plattenwärmetauschers erreicht werden.

Die Brauchwassererwärmungseinheit weist neben dem zumindest einen Wärmetauscher eine Umwälzpumpe für das Heizmedium auf. Die Umwälzpumpe fördert das Heizmedium dabei durch den Wärmetauscher. Bevorzugt schließt sich der Wärmetauscher an die Druckseite der Pumpe an, sodass die Umwälzpumpe eingangsseitig des Heizmedium-Eingangs des Wärmetauschers angeordnet ist. Es ist jedoch auch denkbar, die Umwälzpumpe ausgangsseitig des Heizmedium-Ausgangs des Wärmetauschers anzuordnen, sodass die Saugseite der Pumpe dem Wärmetauscher zugewandt ist. Besonders bevorzugt ist die Umwälzpumpe an dem Wärmetauscher befestigt. Insbesondere bei Ausgestaltung des Wärmetauschers als Plattenwörmetauscher kann dieser, wie oben beschrieben, eine tragende Struktur bilden. An einer solchen von dem Wärmetauscher gebildeten tragenden Struktur kann auch die Umwälzpumpe insbesondere direkt über die Rohrstücke, welche die Umwälzpumpe mit dem Wärmetauscher verbinden, gehalten werden.

Gemäß einer weiteren bevorzugten Ausführungsform weist der zumindest eine Wärmetauscher an zumindest einem Ein- oder Ausgang des ersten und/oder zweiten Strömungsweges eine Anschlussarmatur zur Verbindung mit einer Anschlussleitung auf. Diese Anschlussarmatur bildet somit ein Anschlusselement, welches die Verbindung zwischen Wärmetauscher und einer Anschlussleitung zum Anschluss der Brauchwassererwärmungseinheit an ein Heizungssystem bildet. Dazu weist die Anschlussarmatur im Inneren vorzugsweise zumindest einen Strömungsweg oder Strömungskanal auf, welcher mit einem Ende mit dem Ein- oder Ausgang des Wärmetauschers verbunden ist und dessen entgegengesetztes Ende zur Verbindung mit der Anschlussleitung vorgesehen ist. Dazu kann an diesem Ende eine übliche Anschlusskonfiguration wie eine Steckverbindung, ein Gewinde etc., gegebenenfalls mit erforderlicher Dichtung, ausgebildet sein.

Weiter bevorzugt ist in der Anschlussarmatur ein Temperatur- und/oder Strömungssensor angeordnet. Ein solcher Temperatur- und /oder Strömungssensor kann zur Steuerung bzw. Regelung der Brauchwassererwärmungseinheit eingesetzt werden. Insbesondere ist es bevorzugt, im Strömungsweg für das zu erwärmende Brauchwasser, d. h. ein- oder ausgangsseitig des zweiten Strömungsweges des Wärmetauschers einen Temperatur- und/oder Strömungssensor vorzusehen, welcher eine Brauchwasseranforderung bzw. einen Brauchwasserbedarf erfasst. D. h. dieser Temperatur- und/oder Strömungssensor erfasst eine Temperaturänderung oder Strömung in dem Strömungsweg für das Brauchwasser, was eine Anlagensteuerung signalisiert, dass erwärmtes Brauchwasser angefordert wird, sodass die Steuerung dann entsprechend den Zufluss von Heizmedium zu dem Wärmetauscher zur Erwärmung des Brauchwasser veranlassen und steuern kann. Darüber hinaus kann auch ein Temperatursensor in dem ersten Strömungsweg, d. h. ein- oder ausgangsseitig des ersten Strömungsweges in dem Wärmetauscher in der Strömung des Heizmediums angeordnet sein, um die Temperatur des Heizmediums, insbesondere ausgangsseitig des Wärmetauschers zu erfassen. Auf Grundlage dieser Temperatur lässt sich der Volumenstrom des Heizmediums bedarfgerecht einstellen in Abhängigkeit des Wärmebedarfs zur Erwärmung des Brauchwassers.

Eine Anschlussarmatur der beschriebenen Art kann somit entweder zur Verbindung mit dem ersten Strömungsweg oder zur Verbindung mit dem zweiten Strömungsweg in dem Wärmetauscher vorgesehen sein. Allerdings ist auch eine kombinierte Anschlussarmatur möglich, welche in ihrem Inneren zwei Strömungskanäle, einen für das Brauchwasser und einen für das Heizmedium aufweist, sodass mit einer Anschlussarmatur beide Strömungswege in dem Wärmetauscher mit externen Rohrleitungen oder Bauteilen verbunden werden können.

Bevorzugt ist eine Anschlussarmatur gemäß der vorangehenden Beschreibung mit der Umwälzpumpe für das Heizmedium verbunden. D. h. eine solche Anschlussarmatur kann die Verbindung zwischen Umwölzpumpe und Wärmetauscher herstellen. Dabei bildet bevorzugt ein Strömungskanal im Inneren der Anschlussarmatur eine fluidleitenden Verbindung von der Umwälzpumpe zu dem ersten Strömungsweg im Inneren des Wärmetauschers. Darüber hinaus kann die Ahschlussarmatur auch eine mechanische Verbindung zwischen Wärmetauscher und Umwälzpumpe herstellen, um die Umwälzpumpe auf diese Weise an dem Wärmetauscher zu befestigen, sodass der Wärmetauscher als tragendes Element die Umwälzpumpe trägt.

Die vorangehend beschrieben Brauchwassererwärmungseinheit weist darüber hinaus vorzugsweise Befestigungselemente auf, welche zur Anbringung der Brauchwassererwärmungseinheit an einem Heizkessel oder Wasserspeicher ausgebildet sind. Die Brauchwassererwärmungseinheit kann somit als Ganzes ein Modul darstellen, welches mit einem Heizkessel bzw. Wärmeerzeuger oder Wasserspeicher verbindbar ist. Durch die Befestigungselemente wird dabei eine mechanische Verbindung geschaffen. Die Fluidverbindungen werden durch entsprechende Rohrleitungen hergestellt, wobei diese gegebenenfalls alternativ oder zusätzlich eine mechanische Befestigung bewirken können. Die Befestigungselemente können direkt an dem Wärmetauscher als tragender Struktur ausgebildet sein. Die Befestigungselemente können beispielsweise als Traggestell ausgebildet sein, welches an dem Wärmetauscher befestigt ist und seinerseits beispielsweise durch Schrauben oder eine Haken-Verbindung mit einem Heizkessel oder Wasserspeicher verbunden werden kann. Das Traggestell kann darüber hinaus so ausgebildet sein, dass es gleichzeitig als Handgriff dient oder es kann Handgriffe tragen, welche die Handhabung der Brauchwassererwärmungseinheit bei der Montage vereinfachen. Ferner kann ein solches Traggestell zusätzlich noch ein Gehäuse, welches insbesondere auch als thermische Isolierung dienen kann, tragen.

Nachfolgend wird die Erfindung beispielhaft anhand der beigefügten Figuren beschrieben. In diesen zeigt:
- Fig. 1: eine Gesamtansicht einer an einem Wärmespeicher angeordneten Brauchwassererwärmungseinheit,
- Fig. 2: eine perspektivische Gesamtansicht der Brauchwassererwärmungseinheit gemäß Fig. 1,
- Fig. 3: eine perspektivische Ansicht des Wärmetauschers mit einer Anschlussarmatur,
- Fig. 4: eine Schnittansicht der Brauchwassererwärmungseinheit gemäß Fig. 2,
- Fig. 5, 6: eine Brauchwassererwärmungseinheit gemäß Fig. 1, 2 und 4 ohne Brauchwasserzirkulationsmodul,
- Fig. 7: eine perspektivische Explosionsansicht der Brauchwassererwärmungseinheit mit Brauchwasserzirkulationsmodul,
- Fig. 8: eine perspektivische Ansicht der Brauchwassererwärmungseinheit mit montiertem Brauchwasserzirkulationsmodul,
- Fig. 9: schematisch die Strömungswege im Inneren des Wärmetauschers gemäß Fig. 3,
- Fig. 10: den Temperaturverlauf im Inneren des Wärmetauschers über den Strömungsweg,
- Fig. 11: ein hydraulisches Schaltbild einer Brauchwassererwärmungseinheit,
- Fig. 12: den Temperaturverlauf, welcher von einem Temperatursensor im Kaltwassereingang der Brauchwassererwärmungseinheit erfasst wird,
- Fig. 13: schematisch die Datenübertragung von den Sensoren zu einer Steuereinrichtung,
- Fig. 14: die Anordnung mehrerer Brauchwassererwärmungseinheiten 2 in einer Kaskadenanordnung,
- Fig. 15: schematisch die Steuerung der mehreren Brauchwassererwärmungseinheiten gemäß Fig. 14 und
- Fig. 16: schematisch den Regelkreis zur Regelung der Brauchwassererwärmungseinheiten.

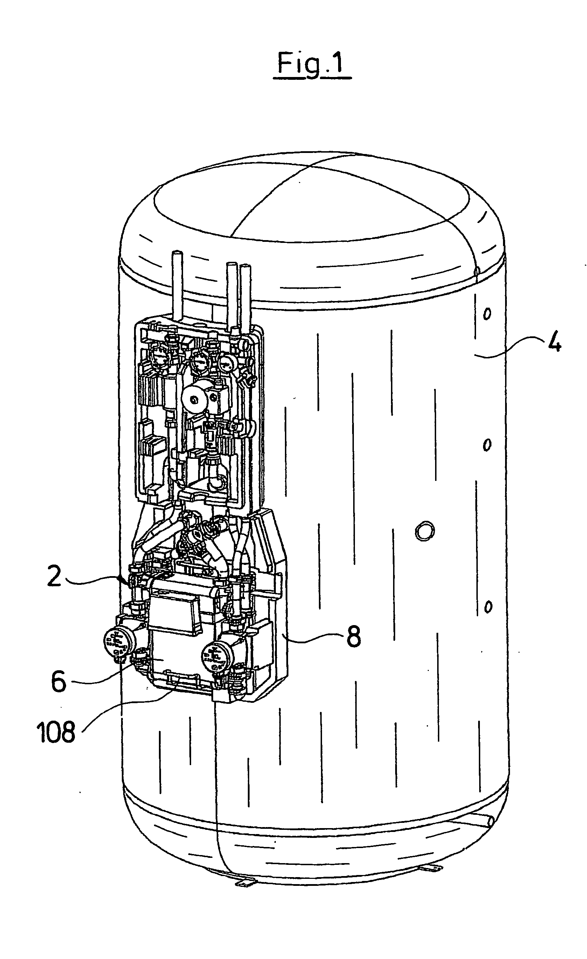

Die als Beispiel gezeigte Wärmetauschereinheit ist eine Brauchwassererwärmungseinheit 2 und zur Verwendung in einer Heizungsanlage vorgesehen. Im hier gezeigten Beispiel (Fig. 1) ist die Brauchwassererwärmungseinheit 2 an einem Wärmespeicher 4, beispielsweise einem Wasserspeicher, welcher von einer Solaranlage erwärmtes Heizungswasser speichert, angebracht. Aus dem Wärmespeicher 4 wird der Wärmetauscher 6 der Brauchwassererwärmungseinheit 2 mit Heizmedium zum Erwärmen von Brauchwasser versorgt. In Fig. 1 ist ein die Brauchwassererwärmungseinheit 2 umgebendes Gehäuse geöffnet dargestellt, d. h. der Frontdeckel ist abgenommen. In den übrigen Figuren ist die Brauchwassererwärmungseinheit 2 ohne umgebendes Gehäuse dargestellt.

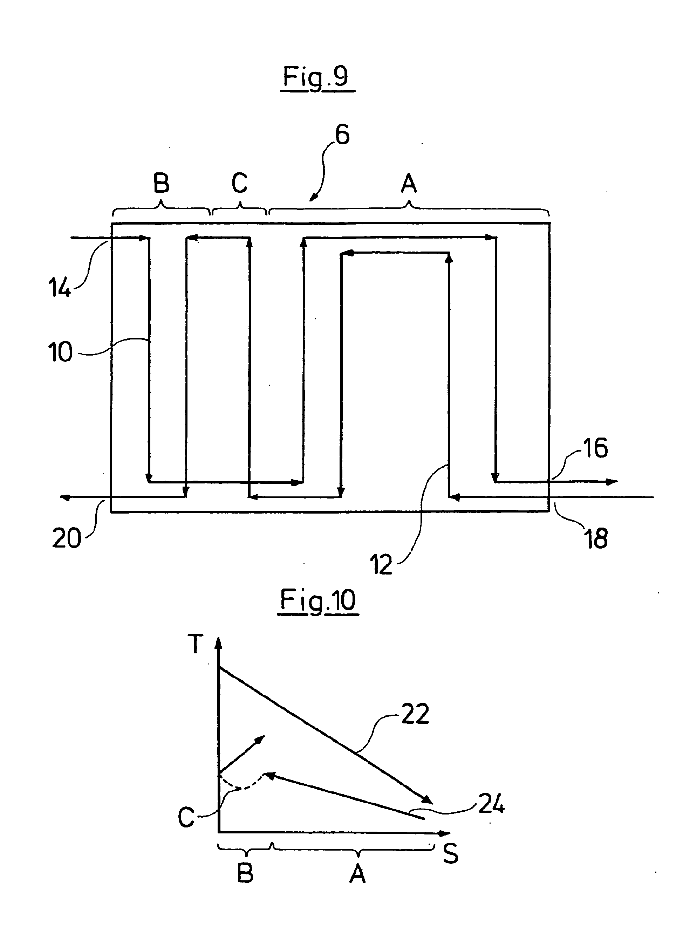

Zentraler Bestanteil der Wärmetauschereinheit bzw. Brauchwassererwärmungseinheit 2 ist ein Wärmetauscher 6 in Form eines Plattenwörmetauschers. Über den Wärmetauscher 6 wird zu erwärmendes Brauchwasser erwärmt und als erwärmtes Brauchwasser abgegeben, beispielsweise um in einem Haus Zapfstellen 7 an Waschbecken, Duschen, Badewannen etc. mit warmem Brauchwasser zu versorgen. Um das Brauchwasser zu erwärmen, wird der Wärmetauscher mit Heizmedium versorgt. Er weist in seinem Inneren zwei Strömungswege auf, wie schematisch in Fig. 9 dargestellt. Ein erster Strömungsweg 10 ist der Strömungsweg, durch welchen das Heizmedium durch den Wärmetauscher geführt wird. Der zweite Strömungsweg 12 ist der Strömungsweg, durch welchen das Brauchwasser durch den Wärmetauscher geleitet wird. Beide Strömungswege sind in bekannter Weise durch Platten voneinander getrennt, über welche ein Wärmeübergang von dem Heizmedium zu dem Brauchwasser möglich ist.

Die beiden äußeren Platten 13 des Plattenstapels bilden zwei einander entgegengesetzte Seitenflächen des Wärmetauschers 6. An diesen Seitenflächen sind die Fluidanschlüsse 14 bis 20 des Wärmetauschers 6 ausgebildet und werden, wie nachfolgend beschreiben, Anschlussarmaturen befestigt.

Durch den Eingang 14 tritt das Heizmedium in den Wärmetauscher 6 und durch den Ausgang 16 wieder aus. Das zu erwärmende Brauchwasser tritt an dem Eingang 18 in den Wärmetauscher 6 ein und an dem Ausgang 20 aus dem Wärmetauscher wieder aus. Wie in Fig. 9 schematisch dargestellt, ist der Wärmetauscher in drei Abschnitt A, B, C geteilt. In Strömungsrichtung des Brauchwassers durch den zweiten Strömungsweg 12 bildet der Abschnitt A einen ersten Abschnitt, in welchem der erste Strömungsweg 10 und der zweite Strömungsweg 12 im Gegenstrom aneinander vorbeigeführt sind. D. h. das zu erwärmende Brauchwasser und das Heizmedium strömen in entgegengesetzten Richtungen an den sie trennenden Platten des Wärmetauschers vorbei. Dies hat den Effekt, dass das kalte Brauchwasser, welches am Eingang 18 in den Wärmetauscher 6 eintritt, zunächst von dem bereits angekühlten am Ausgang 16 austretenden Heizmedium erwärmt wird und dann in Strömungsrichtung in die Nähe von immer wärmeren Heizmedium kommt. Der Wärmetauscher 6 weist einen zweiten Abschnitt B auf, in welchem der erste Strömungsweg 10 und der zweite Strömungsweg 12 dann nicht mehr in Gegenstromanordnung relativ zu einander geführt sind, sondern in einer Mitstromanordnung geführt sind, d. h. die Strömungen in dem ersten Strömungsweg 10 und im zweiten Strömungsweg 12 verlaufen gleichgerichtet zueinander in derselben Richtung entlang der sie trennenden Platten oder anderer sie trennender wärmeleitender Trennelemente.

Zwischen dem ersten Abschnitt A und dem zweiten Abschnitt B ist ein Umkehrabschnitt C ausgebildet, in welchem die relative Umkehr der Strömungsrichtungen in den Strömungswegen zueinander realisiert ist. Im hier gezeigten Beispiel sind die Abschnitte A, B und C des Wärmetauschers in einen Wärmetauscher integriert. Es ist jedoch zu verstehen, dass die Abschnitte A und B auch in separaten Wärmetauschern ausgebildet werden könnten und die Richtungsumkehr der Strömungen zueinander im Abschnitt C durch eine entsprechende Verrohrung der beiden Wärmetauscher realisiert werden könnte.

Durch die Umkehr zum Mitstromprinzip wird erreicht, dass eine Überhitzung des Brauchwassers verhindert wird, da das am Ausgang 20 austretenden erwärmte Brauchwasser im letzten Abschnitt seines Strömungsweges 12 nicht direkt durch das am Eingang 14 eintretenden heiße Heizmedium erwärmt wird, sondern durch bereits etwas abgekühltes Heizmedium. Dadurch ist die maximal zu erreichende Brauchwassertemperatur begrenzt. Dies ist in Fig. 10 zu erkennen. In dem in Fig. 10 gezeigten Diagramm ist die Temperatur T des Heizmediums als Kurve 22 über dem Weg s aufgetragen und die Temperatur T des Brauchwassers als Kurve 24 über dem Weg s aufgetragen. Es ist zu erkennen, dass der Austritt des Brauchwassers nicht im Bereich der höchsten Temperatur des eintretenden Heizmediums liegt, insofern kann maximal eine Temperatur erreicht werden, welche auf dem Niveau der Temperatur des Heizmediums im Bereich des Ausgangs 20 des Brauchwasser aus dem Wärmetauscher liegt.

An dem Plattenwärmetauscher 6 sind der Eingang 14 für das Heizmedium, der Ausgang 16 für das Heizmedium, der Eingang 18 für das zu erwärmende Brauchwasser sowie der Ausgang 20 für das erwärmte Brauchwasser als Fluidanschlüsse ausgebildet, an welchen wiederum Anschlussarmaturen angesetzt sind, welche die Verbindung zu weiteren Bauteilen und Rohrleitungen herstellen. An den Ausgang 20 für das erwärmte Brauchwasser ist eine erste Anschlussarmatur 26 angesetzt. Diese Anschlussarmatur weist ein Basiselement 28 auf, welches in identischer Ausgestaltung in der zweiten Anschlussarmatur 30 lediglich um 180° gedreht an den den Ausgang 16 und den Eingang 18 bildenden Fluidanschlüssen des Wärmetauschers 6 angesetzt ist. Dies hat den Vorteil, dass ein und dasselbe Basiselement 28 als erste Anschlussarmatur und als zweite Anschlussarmatur eingesetzt werden kann und die Teilevielfalt reduziert werden kann.

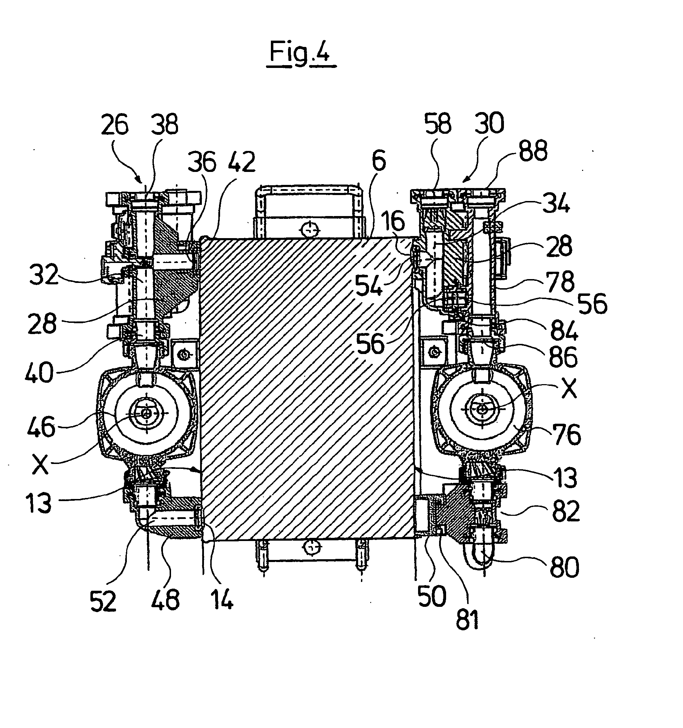

In dem Basiselement 28 sind zwei voneinander getrennte Strömungskanäle 32 und 34 ausgebildet. Der Strömungskanal 32 ist T-förmig ausgebildet und mündet zu drei Anschlussöffnungen 36, 38 und 40 (siehe Schnittansicht in Fig. 4). Bei Verwendung des Basiselementes 28 als erste Anschlussarmatur 26 ist die Anschlussöffnung 36 ungenutzt und durch die Wandung des Wärmetauschers 6 verschlossen, wobei zwischen dem Basiselement 28 und der Wandung des Wärmetauschers 6 an der Anschlussöffnung 38 eine Dichtung 42 zur Abdichtung angeordnet ist. Die Anschlussöffnung 38 bildet den Anschluss zur Verbindung mit einer Zufuhrleitung 44, welche mit dem Wärmespeicher 4 zur Zufuhr von heißem Heizmedium verbunden ist. An der entgegengesetzt gelegenen Anschlussöffnung 40 des Strömungskanals 32 ist an dem Basiselement 28 bei Verwendung in der ersten Anschlussarmatur 26 eine erste Umwälzpump 46 angeordnet, welche das Heizmedium dem Eingang 14 des Wärmetausches 6 zuführt. Dazu ist an dem Eingang 14 eine dritte Anschlussarmatur 48 angeordnet, welche in identischer Ausgestaltung lediglich um 180° gedreht an der entgegengesetzten Seite des Wärmetauschers 6, wie weiter unten beschrieben, als vierte Anschlussarmatur 50 angeordnet werden kann. D. h. auch die dritte Anschlussarmatur 48 und die vierte Anschlussarmatur 50 werden zumindest aus einem identischen Basiselement gebildet.

In der dritten Anschlussarmatur 48 ist ein Strömungskanal 52 ausgebildet, welcher den Druckstutzen der Umwälzpumpe 46 mit dem Eingang 14 des Wärmetauschers verbindet.

Der zweite Strömungskanal 34 in dem Basiselement 28 ist, wie in der Schnittansicht anhand der zweiten Anschlussarmatur 30 zu erkennen ist, ebenfalls T-förmig ausgebildet und weist drei Anschlussöffnungen 54, 56 und 58 auf. In der ersten Anschlussarmatur 26 ist die Anschlussöffnung 58 des zweiten Strömungskanals 34 verschlossen, z. B. durch einen eingesetzten Stopfen. Die Anschlussöffnung 54 ist mit dem Ausgang 20 des Wärmetauschers 6 verbunden, wobei ebenfalls eine Dichtung 42 zwischen der Anschlussarmatur 26 und dem Wärmetauscher 6 angeordnet ist. An die Anschlussöffnung 56 des zweiten Strömungskanals 34 ist in der ersten Anschlussarmatur 26 Anschlussteil 60 angesetzt, welches die Anschlussöffnung 58 über einen im Inneren des Anschlussteils 60 ausgebildeten Strömungskanal mit dem Leitungsanschluss 62 verbindet. Der Leitungsanschluss 62 dient zur Verbindung mit einer Warmwasserleitung, durch die das erwärmte Brauchwasser abgeführt wird.

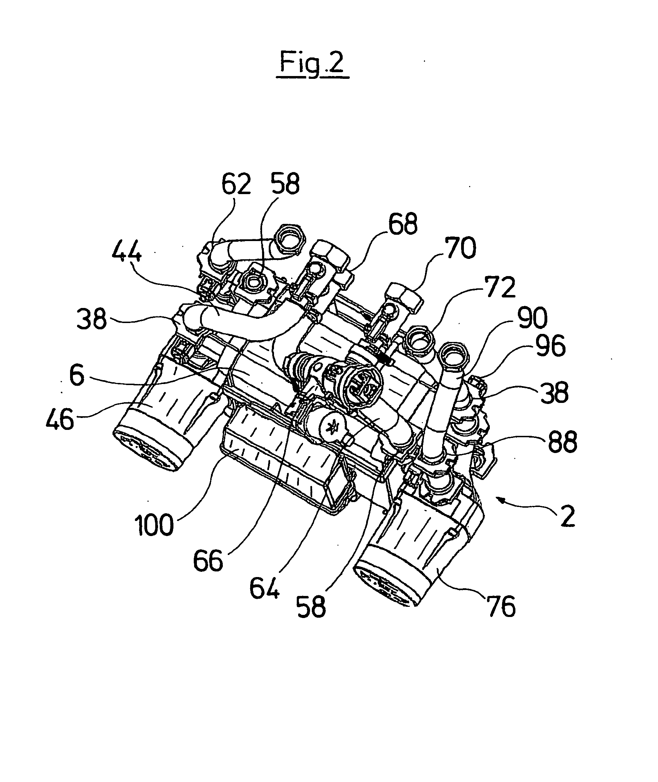

An der entgegengesetzten Seitenfläche des Plattenwärmetauschers 6, welcher die tragende Struktur der Brauchwassererwärmungseinheit bildet, ist das Basiselement 28 als zweite Anschlussarmatur 30 angesetzt. Durch die zweite Anschlussarmatur 30 werden der Ausgang 16 für das Heizmedium sowie der Eingang 18 für das kalte Brauchwasser mit der externen Installation verbunden. An den Ausgang 16 des Wärmetauschers schließt bei dieser um 180° gedrehten Anordnung des Basiselementes 28 die Anschlussöffnung 54 des zweiten Strömungskanals 34 an. Dieser zweite Strömungskanal 34 stellt eine Verbindung zu dem Leitungsanschluss bzw. der Anschlussöffnung 58 her, welche den Ausgang des abgekühlten Heizmediums bildet. An diese Anschlussöffnung 58 kann eine Leitung angeschlossen werden, welche das Heizmedium zurück in den Wärmespeicher 4 führt. Bei der in Fig. 2 gezeigten Ausführungsform, bei welcher gleichzeitig, wie unten beschrieben wird, eine Zirkulation des Brauchwasser vorgesehen ist, ist an die Anschlussöffnung 58 eine Leitung 64 angeschlossen, welche zu einem Umschaltventil 66 führt, welches wahlweise eine Verbindung der Leitung 64 zu den Anschlüssen 68 und 70 herstellt. Die Anschlüsse 68 und 70 dienen zu Verbindung mit dem Wärmespeicher 4, wobei diese Anschlüsse beispielsweise eine Verbindung zum Inneren des Wärmespeichers 4 an unterschiedlichen vertikalen Position herstellen kann, sodass je nach Temperatur des aus den Wärmetauscher 6 austretenden Heizmediums dieses durch Umschalten des Umschaltventils 66 an unterschiedlichen vertikalen Positionen in den Wärmespeicher 4 zurückgeführt werden kann, um eine dort vorhandene Schichtung des Heizmediums aufrechtzuerhalten. Die Umschaltfunktion ist insbesondere dann von Vorteil, wenn, wie unten beschrieben, ein Brauchwasserzirkulationsmodul 74 vorgesehen ist. Die Erwärmung des zirkulierten Brauchwassers erfordert einen geringeren Wärmebedarf, sodass dabei das Heizmedium mit höhere Temperatur in den Wärmespeicher 4 zurückströmt.

Der Strömungsweg 32 im Inneren des Basiselementes ist bei der zweiten Anschlussarmatur 30 mittels der Anschlussöffnung 36 mit dem Eingang 18 verbunden. An die Anschlussöffnung 38 wird eine Kaltwasserleitung 42 zur Zufuhr des kalten Brauchwassers angeschlossen. Durch diese Leitung tritt das kalte Wasser dann in den Eingang 18 in den Wärmetauscher ein.

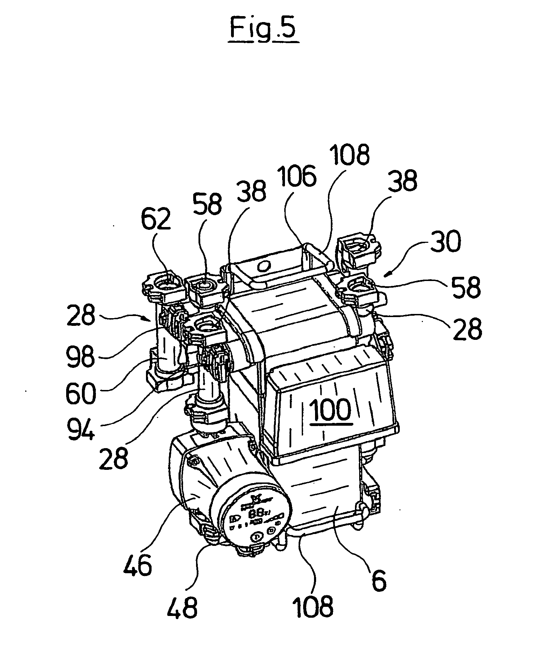

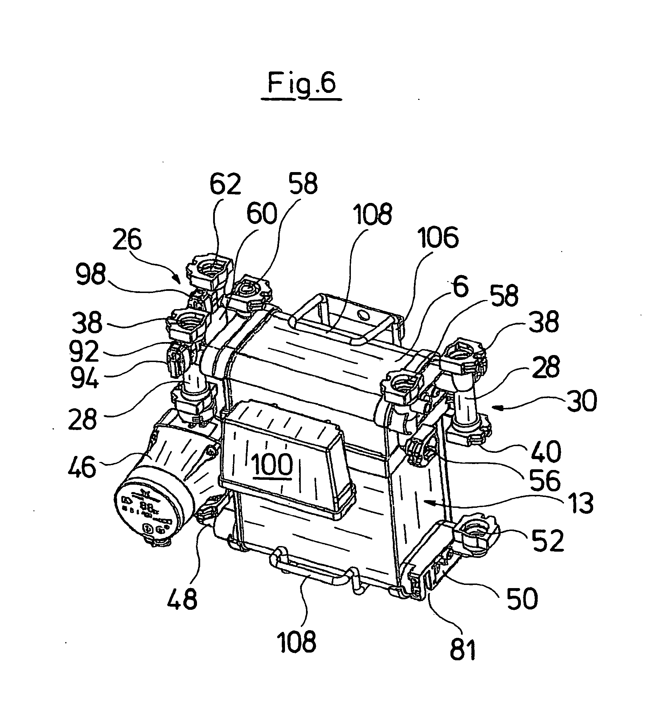

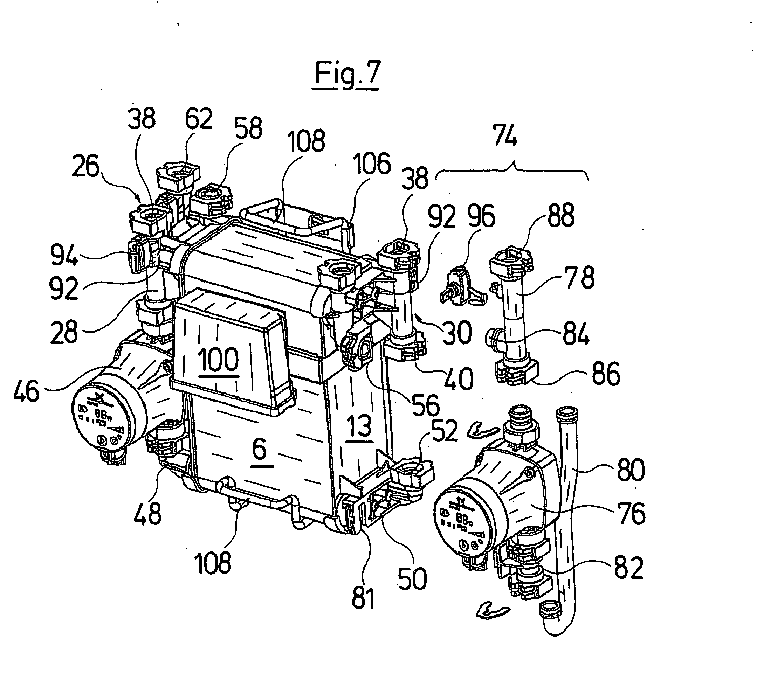

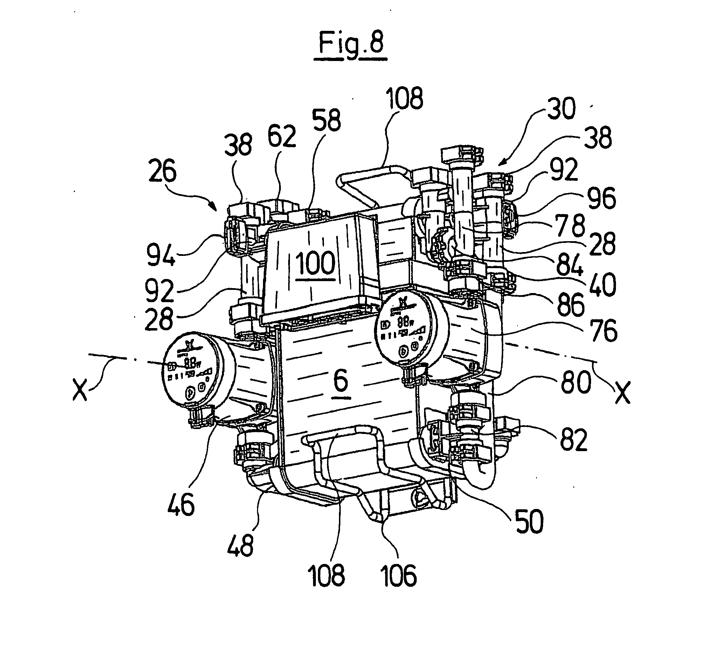

Die hier gezeigte Brauchwasserwörmungseinheit kann in zwei verschiedenen Ausführungsformen Verwendung finden, nämlich einmal mit einem Brauchwasserzirkulationsmodul 74 oder auch ohne dieses Brauchwasserzirkulationsmodul 74. In Fig. 1, 2, 4, 7 und 8 ist diese Brauchwasserzirkulationsmodul 74 an dem Wärmetauscher 6 angeordnet. Die Fig. 5 und 6 zeigen die Anordnung ohne das Brauchwasserzirkulationsmodul 74. Wenn das Brauchwasserzirkulationsmodul 74 nicht vorgesehen ist, ist die vierte Anschlussarmatur 50 nicht erforderlich und die Anschlussöffnung bzw. der Leitungsanschluss 40 des Basiselementes 28 der zweiten Anschlussarmatur 30 ist durch einen Stopfen verschlossen. Auch die Anschlussöffnung 56 des Strömungskanals 34 ist in diesem Fall durch einen Stopfen verschlossen.

Das Brauchwasserzirkulationsmodul 74 besteht aus einer zweiten Umwälzpumpe 76, welche der Zirkulation des Brauchwassers im Warmwasserleitungssystem eines Gebäudes dient. Zum Anschluss der zweiten Umwälzpumpe 76 sind ein Anschlussteil 78 und ein Rohr 80 vorgesehen. Zur Halterung der Pumpe 76 an dem Wärmetauscher 6 wird dazu am Ende einer Seitenfläche eine vierte Anschlussarmatur 50 angeordnet, welche identisch zu der dritten Anschlussarmatur 48 ist bzw. ein identisches Basiselement aufweist. Allerdings findet bei der Verwendung als vierte Anschlussarmatur 50 der Strömungskanal 52 keine Verwendung. An dem Basiselement der dritten und vierten Anschlussarmatur ist eine Aufnahme 81 ausgebildet, in welche ein Anschlusselement 82 eingesetzt wird, welches mit einem Druckstutzen der Umwälzpumpe 76 verbunden ist. Das Anschlusselement 82 weist in seinem Inneren einen Strömungskanal auf und stellt darüber eine Verbindung zu dem Rohr 80 her. Das Rohr 80 wird mit seinem dem Anschlusselement 82 abgewandten Ende mit der Anschlussöffnung 40 des Strömungskanals 32 in der zweiten Anschlussarmatur 30 verbunden, wobei die Anschlussöffnung 40 dann nicht durch einen Stopfen verschlossen ist. Auf diese Weise kann die als Zirkulationspumpe dienende Umwälzpumpe 46 einen Teil des erwärmten Brauchwassers zurück in den Strömungskanal 32 der zweiten Anschlussarmatur 30 und durch dessen Anschlussöffnung 36 in den Eingang 18 des Wärmetauschers zurückführen. D. h. im Strömungskanal 32 der zweiten Anschlussarmatur fließen zugeführten kaltes Brauchwasser durch die Anschlussöffnung 38 und durch die Zirkulationspumpe 76 zurückgefördertes Brauchwasser durch die Anschlussöffnung 40 zusammen.

Das Anschlussteil 48 ist auf das Basiselement 28 der zweiten Anschlussarmatur 30 so aufgesetzt, dass es mit einem verschlossenen Stutzen 84 in die Anschlussöffnung 56 des zweiten Strömungskanals 34 eingreift und so die Anschlussöffnung 56 verschließt, sodass zu deren Verschluss in der zweiten Anschlussarmatur 30 kein zusätzlicher Stopfen mehr erforderlich ist. Das Anschlussteil 78 ist im Übrigen rohrförmig ausgebildet und verbindet zwei an entgegengesetzten Enden gelegen Anschlussöffnungen 86 und 88. Der Stutzen 84 weist keine fluidleitende Verbindung zu der Verbindung zwischen den Leitungsanschlüssen bzw. Anschlussöffnungen 86 und 88 auf. Die Anschlussöffnung 86 ist mit dem Saugstutzen der zweiten Umwälzpumpe 76 verbunden und die Anschlussöffnung 88 bildet einen Anschluss, an welchen eine Zirkulationsleitung 90 angeschlossen wird. Durch Verwendung des Anschlussteiles 78 und einer vierten Anschlussarmatur 50, welche mit ihrem Basiselement identisch zu der dritten Anschlussarmatur 48 ausgebildet ist, kann somit mit wenigen zusätzlichen Teilen eine zweite Umwälzpumpe 76, welche eine Zirkulationspumpe darstellt, ebenfalls an dem als tragende Struktur dienenden Wärmetauscher 6 befestigt werden, und die Zirkulationsleitung über die Umwälzpumpe 46 direkt mit dem zweiten Strömungsweg 12 im Inneren des Wärmetauschers fluidleitend verbunden werden.

In dem Basiselement 28 der ersten und zweiten Anschlussarmaturen 26 und 30 ist im Strömungskanal 32 eine Sensoraufnahme 92 ausgebildet, welche zur Aufnahme eines Sensors dienen kann. Bei Verwendung des Basiselements 28 als zweite Anschlussarmatur 30 ist die Sensoraufnahme 92, wenn kein Brauchwasserzirkulationsmodul 74 angebracht ist, verschlossen. In der ersten Anschlussarmatur 26 ist in die Sensoraufnahme 92 ein Temperatursensor 94 eingesetzt, welcher die Temperatur des dem Wärmetauscher 6 zugeführten Heizmediums erfasst. Bei Verwendung des Brauchwasserzirkulationsmoduls 74 ist auch in die Sensoraufnahme 92 des Basiselementes 28 der zweiten Anschlussarmatur 30 ein Temperatursensor 96 eingesetzt, welcher zur Erfassung einer Brauchwasseranforderung dient und dessen spezielle Funktion weiter unten beschrieben wird. Darüber hinaus weist auch das Anschlussteil 60 eine Sensoraufnahme auf, in welcher ein Sensor 98 eingesetzt ist. Der Sensor 98 ist ein kombinierter Temperatur- und Strömungssensor, welcher die Temperatur und den Durchfluss des aus dem Ausgang 20 aus dem Wärmetauscher 6 durch den Strömungsweg 34 in der ersten Anschlussarmatur 26 austretenden erwärmten Brauchwassers erfasst. Es ist zu verstehen, dass auch die zuvor beschriebenen Temperatursensoren 94, 96 gegebenenfalls als kombinierte Temperatur- und Durchflusssensoren Verwendung finden könnten.

Durch den Sensor 98 kann zum einen die Temperatur des austretenden Brauchwassers erfasst werden und basierend auf dieser Temperatur und der von dem Temperatursensor 94 erfassten Temperatur des Heizmediums der erforderliche Volumenstrom des Heizmediums bestimmt werden und die erste Umwälzpumpe 46 entsprechend betrieben werden. Die dazu erforderliche Steuerung bzw. Regelung für die Umwälzpumpe 46 ist vorzugsweise als Regel- bzw. Steuerelektronik in die Umwälzpumpe 46 integriert.

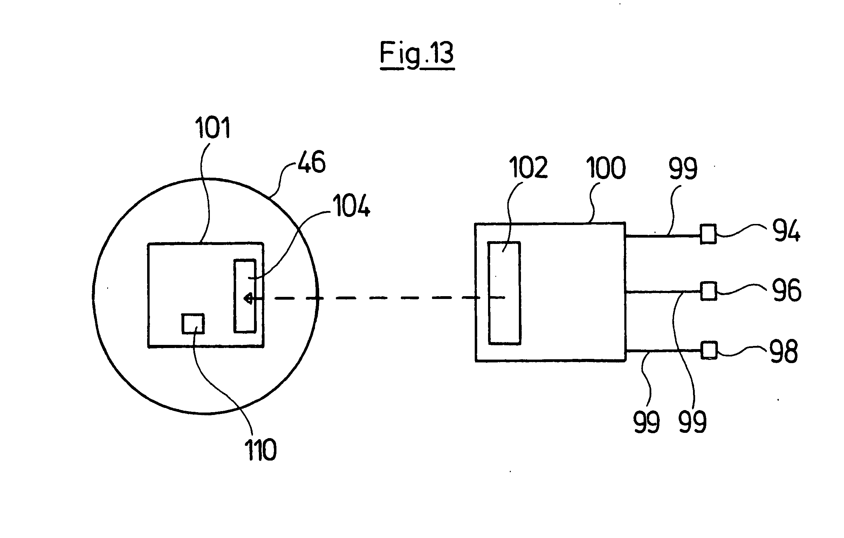

Die Sensoren 94, 96 und 98 sind über elektrische Leitungen 99 mit einer Sensorbox 100 verbunden, welche ein Datenerfassungsmodul bildet. Die Sensorbox 100 erfasst die von den Sensoren 94, 96 und 98 bereitgestellten Daten. Die Sensorbox 100 stellt die erfassten Daten, wie in Fig. 13 gezeigt, der Steuereinheit 101, welche in diesem Beispiel in die Steuerelektronik des Pumpenaggregates 46 integriert ist, zur Verfügung. In der Sensorbox 100 ist dazu eine Ausgabeschnittstelle 102 und in der Steuereinheit 101 eine korrespondierende Eingangschnittstelle 104 ausgebildet. Die Ausgabeschnittstelle 102 und die Eingangsschnittstelle 104 sind hier als Funkschnittellen ausgebildet, welche eine drahtlose Signalübertragung von der Sensorbox 100 zu der Steuereinheit 101 in dem Pumpenaggregat 46 ermöglichen. Dies ermöglicht einen sehr einfachen Anschluss des Pumpenaggregates 46 und auch der Sensoren 94, 96 und 98, da diese nicht direkt mit dem Pumpenaggregat 46 verbunden werden müssen. So können die Sensoren 94, 96 und 98 unabhängig von der Umwälzpumpe 46 angeschlossen und verdrahtet werden und die Umwälzpumpe 46 gegebenenfalls auch leicht ausgetauscht werden, ohne die Verkabelung der Sensoren zu beeinträchtigen. Die Steuereinheit 101 in der Umwälzpumpe 46 steuert bzw. regelt vorzugsweise nicht nur die Umwälzpumpe 46 sondern auch die Umwälzpumpe 76, wozu die Steuereinheit 101 in der Umwälzpumpe 46 vorzugsweise ebenfalls drahtlos über Funk mit der Umwälzpumpe 76 bzw. deren Steuereinrichtung kommunizieren kann. So können beide Umwälzpumpen 46 und 76 sehr leicht angeschlossen werden, da lediglich ein elektrischer Anschluss für die Netzstromversorgung erforderlich ist. Die gesamte Kommunikation für die Steuerung erfolgt drahtlos.

In dem Datenerfassungsmodul 100 bzw. der Sensorbox 100 kann auch bereits eine Signalaufbereitung der von den Sensoren 94, 96 und 98 gelieferten Signale erfolgen, um die erforderlichen Daten in einem vorbestimmten Format der Steuereinrichtung 101 zur Verfügung zu stellen. Die Steuereinheit 101 liest über die Eingangschnittstelle 104 bevorzugt nur die aktuell für die Steuerung benötigten Daten aus der Ausgabeschnittstelle 102 aus, sodass die Datenkommunikation auf ein Minimum beschränkt werden kann.

Die Steuereinheit 101 übernimmt vorzugsweise auch die Steuerung der Zirkulation, welche durch die Umwälzpumpe 76 bei Verwendung des Brauchwasserzirkulationsmoduls 74 bewirkt wird, in der Weise, dass die Umwälzpumpe 76 zur Zirkulation dann abgeschaltet wird, wenn der Temperatursensor 94 eine Temperatur des aus dem Wärmespeicher 4 zugeführten Heizmediums erfasst, welche unter einem vorbestimmten Grenzwert liegt. Auf diese Weise kann verhindert werden, dass der Wärmespeicher 4 aufgrund der Brauchwasserzirkulation übermäßig auskühlt und die Zirkulation kann stattdessen in Zeiten, in welchen die Wärmezufuhr zu dem Wärmespeicher 4, beispielsweise aufgrund fehlender Sonneneinstrahlung auf ein Solarmodul, zu gering ist, ausgesetzt werden.

Die Steuereinheit 101 steuert den Betrieb der Umwälzpumpe 46 in der Weise, dass die Umwälzpumpe 46 zunächst eingeschaltet wird, wenn ein Wärmebedarf zur Erwärmung des Brauchwassers gegeben ist, sodass Heizmedium von dem Wärmespeicher 4 dem Wärmetauscher 6 zugeführt wird. In dem Fall, dass kein Brauchwasserzirkulationsmodul 74 vorgesehen ist, wird dieser Wärmebedarf für das Brauchwasser über den kombinierten Temperaturdurchflusssensor 98 erfasst. Wenn dieser eine Strömung in dem Strömungsweg durch das Anschlussteil 60 erfasst, d. h. eine Brauchwasserströmung, heißt dies, dass eine Zapfstelle für warmes Brauchwasser geöffnet ist, sodass durch die Anschlussöffnung 38 kaltes Brauchwasser zuströmt und ein Wärmebedarf zur Erwärmung des Brauchwassers gegeben ist. So kann die Steuereinheit 101 die Umwälzpumpe 46 in diesem Fall in Betrieb nehmen.

Für den Fall, dass das Brauchwasserzirkulationsmodul 74 angeordnet ist, kann der Brauchwasserbedarf so nicht erfasst werden, da der Sensor 98 auch aufgrund der Zirkulation, welche von der zweiten Umwälzpumpe 76 verursacht wird, eine Strömung erfasst, wenn keine Zapfstelle für Brauchwasser geöffnet ist. In diesem Fall kann von dem Sensor 98 lediglich die Temperatur des aus dem Wärmetauscher 6 austretenden Brauchwassers erfasst werden und für den Fall, dass diese unter einem vorbestimmten Grenzwert liegt, die Umwälzpumpe 46 geschaltet werden, um die Wärmeverluste aufgrund der Zirkulation in der Weise auszugleichen, dass Heizmedium dem Wärmetauscher 6 zugeführt wird und so das zirkulierte Brauchwasser erwärmt wird.

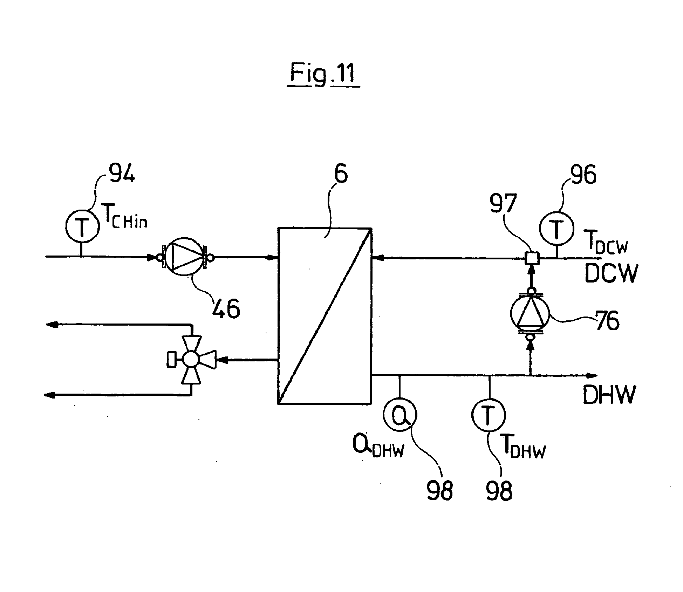

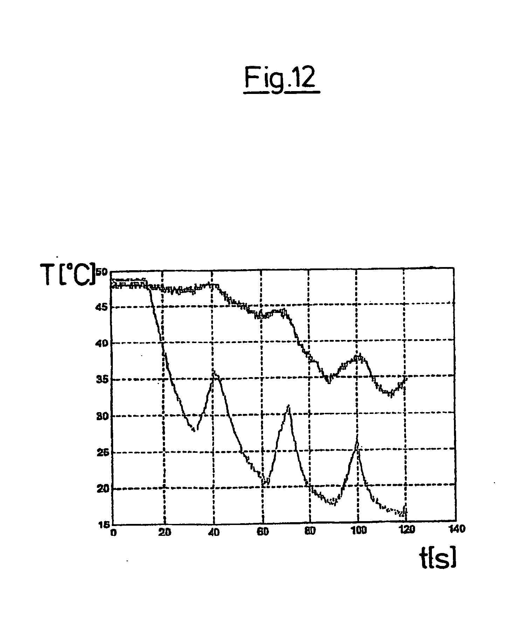

Um in diesem Fall einen Brauchwasserbedarf aufgrund der Öffnung einer Zapfstelle 7 zu erfassen, wird der Temperatursensor 96 genutzt. Dieser ist, wie in Fig. 11 schematisch dargestellt, nicht genau am Knotenpunkt des Strömungskanals 32 in dem Basiselement 28, in welchem die Abschnitte des Strömungskanals von den Anschlussöffnungen 36 und 38 sowie 40 zusammenlaufen, angeordnet, sondern ausgehend von diesem Knotenpunkt zu der Anschlussöffnung 38 hin versetzt. D. h. der Temperatursensor 96 befindet sich in dem Abschnitt des Strömungskanals, durch welchen das kalte Brauchwasser zugeführt wird. Wenn eine Zapfstelle für erwärmtes Brauchwasser geöffnet wird, führt dies zu einer Strömung von kaltem Brauchwasser in diesem Leitungsabschnitt, sodass, wie in der unteren Kurve in Fig. 12 zu erkennen ist, von dem Sensor 96 in dem Abschnitt des ersten Strömungskanals 32, welcher zu der Anschlussöffnung 38 verläuft, ein Temperaturabfall erfasst wird. Bei Erfassung eines solchen Temperaturabfalls schaltet die Steuereinheit 101 die Umwälzpumpe 46 zur Zufuhr von Heizmedium ein. In Fig. 12 sind mehrere aufeinanderfolgende Brauchwasseranforderungen dargestellt, welche jeweils wieder zu einem Temperaturabfall und bei Beendigung der Anforderung von erwärmten Brauchwasser wieder zu einem Temperaturanstieg führen, da sich das in dem Leitungsabschnitt, in welchem der Temperatursensor 96 angeordnet ist, befindliche Wasser dann wieder erwärmt.

Der Temperatursensor 96 ist in der zweiten Anschlussarmatur 30 geringfügig oberhalb des Knotenpunktes, an welchem sich die Strömungswege, bzw. Abschnitte des Strömungskanals 32 von den Anschlussöffnungen 36, 38 und 40 treffen, angeordnet. Auf diese Weise ist sichergestellt, dass sich das Wasser in dem Leitungsabschnitt, in welchem der Sensor 96 gelegen ist, bei Schließen der Zapfstelle für Brauchwasser und somit nicht vorhandener Strömung wieder durch das von der Anschlussöffnung 40 zu dem Eingang 16 strömende von der Umwälzpumpe 46 zirkulierte Brauchwasser langsam durch Wärmeübertragung erwärmt wird.

Wie oben bereits beschrieben, bildet der Wärmetauscher 6 das tragende Element der Brauchwassererwärmungseinheit 2, an welchem die Anschlussarmaturen 26, 30, 48 und gegebenenfalls 50 mit den Pumpen 46 und gegebenenfalls 76 sowie die Sensorbox 100 befestigt sind. Die Brauchwassererwärmungseinheit 2 bildet somit ein integriertes Modul, welches als vorgefertigte Einheit in eine Heizungsanlage bzw. in ein Heizungssystem eingebaut werden kann. Die Umwälzpumpen 46 und 76 sind relativ zu dem Wärmetauscher 6 so angeordnet, dass sich ihre Drehachsen X parallel zu den Oberflächen der Platten, insbesondere der äußeren Platten 13 erstrecken. Um den Wärmetauscher 6 mit den daran angebrachten Komponenten seinerseits an den Wärmespeicher 4 oder an einem anderen Element einer Heizungsanlage befestigen zu können, ist an dem Wärmetauscher 6 eine Haltevorrichtung in Form eines Bügels 106 angebracht. Der Bügel 106 bildet zum einen eine Befestigungsvorrichtung zur Befestigung an dem Wärmespeicher 4 und bildet darüber hinaus Griffelemente 108 an welchen die gesamte Brauchwassererwärmungseinheit 2 ergriffen werden kann, wodurch eine einfache Handhabung der gesamten Einheit bei der Montage möglich ist.

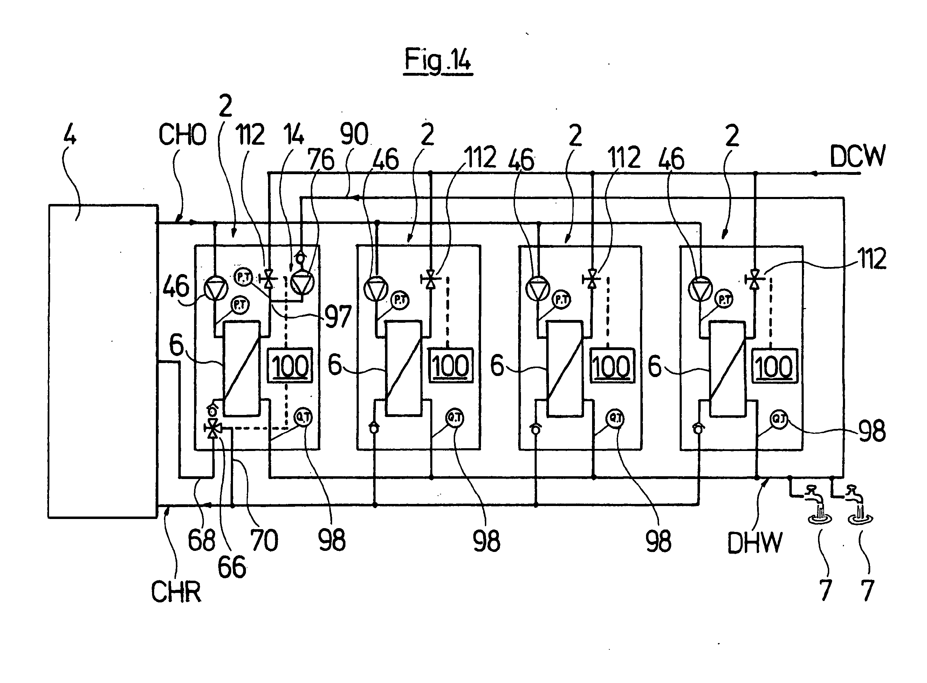

Fig. 14 zeigt eine spezielle Anordnung von Brauchwassererwärmungseinheiten 2. Bei dieser Anordnung sind, um einen größeren Brauchwasserbedarf befriedigen zu können, vier Brauchwassererwärmungseinheiten 2 gemäß der vorangehenden Beschreibung kaskadenartig parallel geschaltet. In dem gezeigten Beispiel sind vier Brauchwassererwärmungseinheiten 2 gezeigt. Es ist jedoch zu verstehen, dass in Abhängigkeit des maximalen Brauchwasserbedarfs auch weniger oder mehr Brauchwasserwärmungseinheiten 2 in entsprechender Weise angeordnet werden können. Alle Brauchwassererwärmungseinheiten 2 werden im gezeigten Beispiel mit Heizmedium aus einem gemeinsamen Wärmespeicher 4 versorgt. Die Brauchwassererwärmungseinheiten 2 sind bis auf eine identisch ausgebildet. Die erste Brauchwassererwärmungseinheit 2, diejenige, welche in Fig. 14 benachbart zu dem Wärmespeicher 4 gelegen ist, ist gemäß der Ausgestaltung, welche in den Fig. 1, 2, 4, 7, 8 und 11 gezeigt ist, ausgebildet, d. h. diese erste Brauchwassererwärmungseinheit 2 weist ein Brauchwasserzirkulationsmodul 74 auf. Das Brauchwasserzirkulationsmodul 74, welches die zweite Umwälzpumpe 46 aufweist, ist mit der Zirkulationsleitung 90 verbunden. Diese schließt sich an der am entferntesten gelegenen Zapfstelle 7 an die Leitung für erwärmtes Brauchwasser DHW an. Auf diese Weise kann erwärmtes Brauchwasser durch das gesamte Leitungssystem, welches die Zapfstellen 7 mit erwärmten Brauchwasser versorgt, zirkuliert werden. Die Funktion dieser Brauchwassererwärmungseinheit 2 mit Brauchwasserzirkulationsmodul 74 entspricht grundsätzlich der obigen Beschreibung. Die drei übrigen Brauchwassererwärmungseinheiten 2 sind ohne Brauchwasserzirkulationsmodul 74 ausgebildet, d. h. wie in der Fig. 5 gezeigt.

Jede der Brauchwassererwärmungseinheiten 2 gemäß Fig. 14 weist eine in die Umwälzpumpe 46 integrierte Steuereinheit 101 sowie eine separate Sensorbox 100 auf. Die einzelnen Steuereinheiten 101 der mehreren Brauchwassererwärmungsmodule 2 kommunizieren über Funkschnittstellen 110 (siehe Fig. 13) miteinander. In der ersten Brauchwassererwärmungseinheit 2 kann die Funkschnittstelle 110 auch zur Kommunikation mit der zweiten Umwälzpumpe 76 und gegebenenfalls dem Umschaltventil 66 Verwendung finden. Allerdings ist es auch möglich, dass das Umschaltventil 66 über die Sensorbox 100 angesteuert wird und dazu mit der Sensorbox 100 über eine elektrische Anschlussleitung verbunden ist.

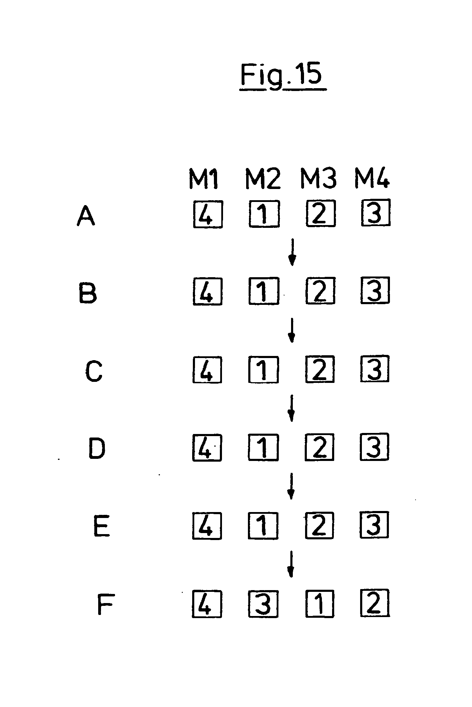

Die Steuereinheiten 101 aller Brauchwassererwärmungseinheiten 2 sind identisch ausgebildet und führen gemeinsam eine Steuerung der Kaskadenanordnung durch, wie sie anhand von Fig. 15 nun näher beschrieben wird.

In Fig. 15 sind die vier Brauchwassererwärmungseinheiten 2 als M1, M2, M3 und M4 bezeichnet. In den darunter angeordneten Kästchen ist durch Zahlen 1 bis 4 die Startreihenfolge der Brauchwassererwärmungseinheiten 2 dargestellt. Diejenige Brauchwassererwärmungseinheit 2, welche die Position 1 in der Startreihenfolge inne hat (im ersten Schritt M2) übernimmt eine Führungsfunktion, d. h. ist die führende Brauchwassererwärmungseinheit 2, d. h. deren Steuereinheit 101 veranlasst auch das Ein- und Ausschalten der weiteren Brauchwassererwärmungseinheiten 2.

Wenn es zu einer Brauchwasseranforderung kommt, d. h. eine der Zapfstellen 7 geöffnet wird, wird dies in der führenden Brauchwassererwärmungseinheit 2, wie oben beschrieben, durch den kombinierten Temperatur-Durchflusssensor 98 erfasst. Bei den mit M2 bis M4 gekennzeichneten Brauchwassererwärmungseinheiten 2 handelt es sich um die in Fig. 14 gezeigten Brauchwassererwärmungseinheiten 2 ohne Brauchwasserzirkulationsmodul 74. Die das Brauchwasserzirkulationsmodul 74 aufweisende Brauchwassererwärmungseinheit 2 ist das in Fig. 15 mit M 1 gekennzeichnete Modul. Dieses übernimmt nie eine Führungsfunktion. Wenn nun das führende Modul M2 im Schritt A eine Brauchwasseranforderung erkennt, wird zunächst diese Brauchwassererwärmungseinheit 2 in Betrieb genommen, d. h. die Umwälzpumpe 46 fördert Heizmedium zu dem zugehörigen Wärmetauscher 6. Wenn nun vom Schritt B zum C die Brauchwassererförderung abgeschaltet wird, ist diese führende Brauchwassererwärmungseinheit 2 im Schritt C immer noch erwärmt. Wenn nun vom Schritt C zum D erneut eine Brauchwasseranforderung durch Öffnen einer Zapfstelle 7 stattfindet, wird daher wiederum diese führende Brauchwassererwärmungseinheit 2 (M2) in Betrieb genommen. Wenn nun der Brauchwasserbedarf durch Öffnen beispielsweise einer weiteren Zapfstelle 7 steigt, wird im Schritt E eine nächste Brauchwassererwärmungseinheit 2 zugeschaltet, indem die Steuereinheit 101 der führenden Brauchwassererwärmungseinheit 2 (M2) der Brauchwassererwärmungseinheit 2 mit der zweiten Position in der Startreihenfolge (hier M3) ein Signal zur Betriebsaufnahme sendet. Deren Steuereinheit 101 nimmt dann entsprechend die Umwälzpumpe 46 dieser weiteren Brauchwassererwärmungseinheit 2 (M3) in Betrieb, um deren Wärmetauscher 6 mit Heizmedium zu versorgen.

Wenn nun vom Schritt E zum Schritt F die Brauchwasseranforderung wieder abgestellt wird, wird die Brauchwassererwärmungseinheit 2 abgeschaltet und die Steuereinheiten 101 der einzelnen Brauchwassererwärmungseinheiten 2 setzten untereinander die Startreihenfolge neu fest. Dies geschieht in der Weise, dass in der Startreihenfolge nun die Brauchwassererwärmungseinheit 2, welche zuletzt zugeschaltet wurde, die erste Position übernimmt und die zuerst eingeschaltete Brauchwassererwärmungseinheit 2, d. h. die bislang führende Brauchwassererwärmungseinheit 2, an die letzte Position rückt (hier M2). Auch die Führungsfunktion wechselt entsprechend zu der Brauchwassererwärmungseinheit 2, welche in der Startreihenfolge nun an erster Position steht (M2). Auf diese Weise wird eine gleichmäßige Nutzung der Brauchwasserwärmungseinheiten 2 sichergestellt und gleichzeitig erreicht, dass die Brauchwassererwärmungseinheit 2, welche zuerst in Betrieb genommen wird, vorzugsweise eine Brauchwassererwärmungseinheit 2 ist, welche noch Restwärme aufweist. Die Brauchwassererwärmungseinheit 2 mit dem Brauchwassercirkulationsmodul 74 behält stets die letzte Position in der Startreihenfolge, d. h. diese wird nur bei maximaler Last zugeschaltet und dient im Übrigen nur dazu, dass zirkulierte Brauchwasser zu erwärmen. Sollte eine Brauchwassererwärmungseinheit 2 defekt sein oder ausfallen, so wird diese vollständig aus der Startreihenfolge herausgenommen, d. h. überhaupt nicht mehr in Betrieb genommen. Dies geschieht alles durch Kommunikation der identischen Steuereinheiten 101 untereinander, sodass auf eine zentrale Steuerung verzichtet werden kann.

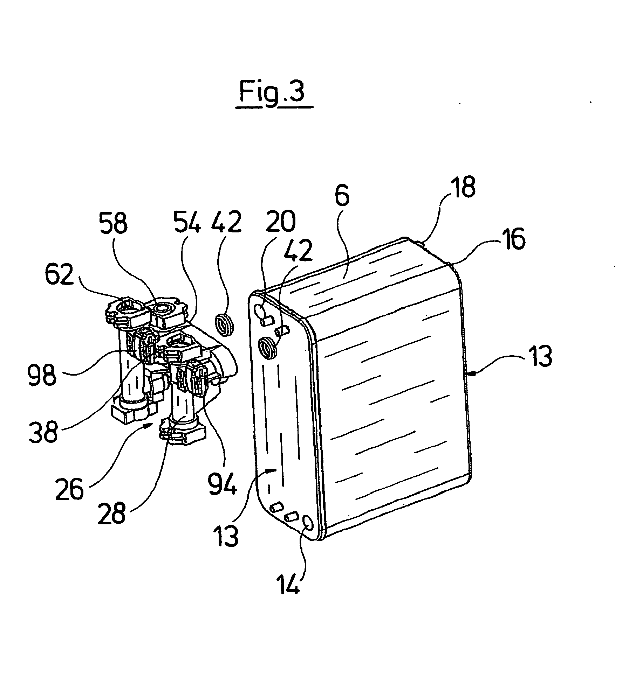

Zum Abschalten der Brauchwassererwärmungseinheiten 2, wenn die kein Brauchwasser erwärmen, ist zusätzlich ein oben anhand der Fig. 1 bis 13 nicht beschriebenes Ventil 112 in der Eingangsleitung für kaltes Brauchwasser DCW jeder Brauchwassererwärmungseinheit 2 angeordnet. Dieses Ventil 112 wird über die Sensorbox 100 von der Steuereinheit 101 angesteuert. Das Ventil 112 ist vorzugsweise über eine elektrische Anschlussleitung mit der Sensorbox 100 verbunden und die Steuereinheit 101 sendet über die Eingangsschnittstelle 104 und die Ausgabeschnittstelle 102 an die Sensorbox 100 ein Signal zum Öffnen und Schließen des Ventils 112. Wenn das Ventil 112 geschlossen ist, wird erreicht, dass kein Brauchwasser durch den jeweiligen Wärmetauscher 6 fließt, sodass verhindert wird, dass kaltes Brauchwasser durch den Wärmetauscher 6 der nicht genutzten Brauchwassererwärmungseinheiten 2 in die Ausgangsleitung für erwärmtes Brauchwasser DHW strömt.

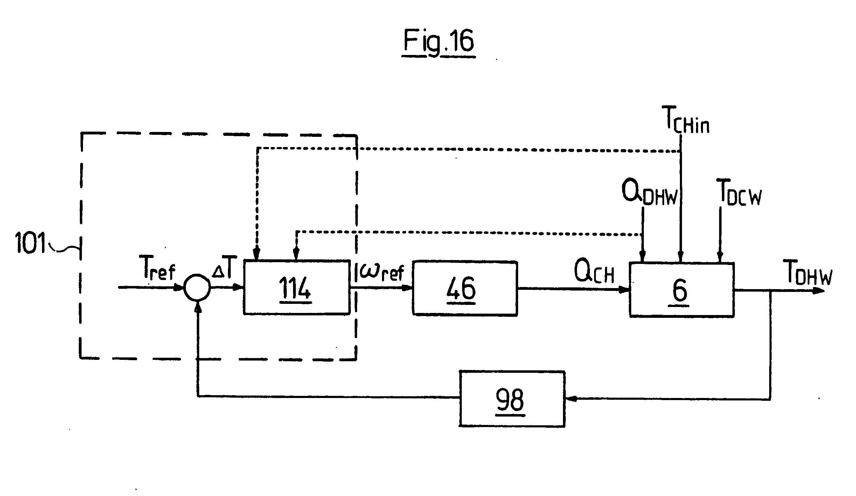

Anhand von Fig. 16 wird nun die Temperaturregelung des erwärmten Brauchwassers DHW in einer Brauchwassererwärmungseinheit 2 gemäß der obigen Beschreibung beschrieben. In der Steuereinheit 101 ist ein Regler 114 angeordnet, welchem eine Solltemperatur T_{ref} für das erwärmte Brauchwasser DHW vorgegeben wird. Diese Solltemperatur kann beispielsweise an der Steuereinheit 101 in der Umwälzpumpe 46 einstellbar sein. Dazu können an der Umwälzpumpe 46 Bedienelemente vorgesehen sein. Alternativ kann über eine drahtlose Schnittstelle, beispielsweise Infrarot oder Funk, auch eine Einstellung mittels einer Fernbedienung oder über eine Anlagenautomatisation erfolgen. Von dem Sollwert T_{ref} wird die von Sensor 98 erfasste Isttemperatur T_{DHW} des erwärmten Brauchwassers DHW subtrahiert. Die Differenz wird als Regeldifferenz ΔT dem Regler 114 zugeführt. Dieser gibt eine Solldrehzahl ω_{ref} für die Umwälzpumpe 76 aus, mit welcher die Ansteuerung der Umwälzpumpe 46 erfolgt, sodass diese einen Volumenstrom Q_{CH} von Heizmedium dem Wärmetauscher 6 zuführt. In diesem Wärmetauscher 6 wird dann das einströmende kalte Brauchwasser DCW erwärmt, sodass es ausgangsseitig des Wärmetauschers 6 die Ausgangstemperatur T_{DHW} hat. Dieser Istwert T_{DHW} wird dann, wie beschrieben, von dem Sensor 98 erfasst und dem Regler wieder zugeführt. D. h. erfindungsgemäß wird die Drehzahl der Umwälzpumpe 46 und damit der Volumenstrom Q_{CH} des Heizmediums in Abhängigkeit der Ausgangstemperatur des warmen Brauchwassers DHW geregelt.

Um ein schnelles Ansprechverhalten zu erreichen, ist in diesem Beispiel darüber hinaus eine Störgrößenaufschaltung im Regler 114 vorgesehen. Dazu wird auch der Volumenstrom des Brauchwassers über den Sensor 98 erfasst und dieser Brauchwasservolumenstrom Q_{DHW} dem Regler 114 als Störgröße aufgeschaltet. Darüber hinaus wird über Temperatursensor 94 die Temperatur T_{CHin} des von der Umwälzpumpe 46 dem Wärmetauscher 6 zugeführten Heizmediums erfasst und dem Regler 114 als Störgröße aufgeschaltet. Unter Berücksichtigung dieser Störgrößen wird die Solldrehzahl ω_{ref} der Umwälzpumpe 46 entsprechend eingestellt, sodass beispielsweise bei kälterem Heizmedium und/oder höherem Brauchwasservolumenstrom gleich die Drehzahl der Umwälzpumpe 46 erhöht werden kann, um schneller die geforderte Solltemperatur T_{ref} für das zu erwärmende Brauchwasser zu erreichen. Eine weitere Störgröße bzw. ein weiterer Parameter, welches Einfluss auf die Brauchwassertemperatur T_{DHW} hat ist die Temperatur T_{DCW} des einströmenden kalten Brauchwasser DCW. Im gezeigten Beispiel wird diese jedoch dem Regler 114 nicht als Störgröße aufgeschaltet, da die Kaltwassertemperatur in der Regel im Wesentlichen konstant ist. Für den Fall, dass die Kaltwassertemperatur erheblichen Schwankungen unterliegen kann, wäre es jedoch denkbar, auch die Temperatur T_{DCW} als Störgröße dem Regler 114 aufzuschalten.

### Bezugszeichenliste

- 2 -: Brauchwassererwärmungseinheit
- 4 -: Wärmespeicher
- 6 -: Wärmetauscher
- 7 -: Zapfstelle
- 8 -: Gehäuse
- 10 -: erster Strömungsweg für das Heizmedium
- 12 -: zweiter Strömungsweg für das Brauchwasser
- 13 -: äußere Platten
- 14 -: Eingang
- 16 -: Ausgang
- 18 -: Eingang
- 20 -: Ausgang
- 22 -: Temperaturkurve des Heizmediums
- 24 -: Temperaturkurve des Brauchwassers
- 26 -: Erste Anschlussarmatur
- 28 -: Basiselement
- 30 -: Zweite Anschlussarmatur
- 32, 34 -: Strömungskanäle
- 36, 38, 40 -: Anschlussöffnungen bzw. Leitungsanschlüsse
- 42 -: Dichtungen
- 44 -: Zufuhrleitung
- 46 -: Erste Umwälzpumpe
- 48 -: Dritte Anschlussarmatur
- 50 -: Vierte Anschlussarmatur
- 52 -: Strömungskanal
- 54, 56, 58 -: Anschlussöffnungen bzw. Leitungsanschlüsse
- 60 -: Anschlussteil
- 62 -: Leitungsanschluss
- 64 -: Leitung
- 66 -: Umschaltventil
- 68, 70 -: Anschlüsse
- 72 -: Kaltwasserleitung
- 74 -: Brauchwasserzirkulationsmodul
- 76 -: Zweite Umwälzpumpe
- 78 -: Anschlussteil
- 80 -: Rohr
- 81 -: Aufnahme
- 82 -: Anschlusselement
- 84 -: Stutzen
- 86, 88 -: Anschlussöffnungen
- 90 -: Zirkulationsleitung
- 92 -: Sensoraufnahme
- 94,96 -: Temperatursensoren
- 97 -: Knotenpunkt
- 98 -: Sensor
- 99 -: Leitungen
- 100 -: Sensorbox
- 101 -: Steuereinheit bzw. Steuer- und Regelelektronik
- 102 -: Ausgabeschnittstelle
- 104 -: Eingangsschnittstelle
- 106 -: Bügel
- 108 -: Hangriffe
- 110 -: Funkschnittstelle
- 112 -: Ventil
- DCW -: kaltes Brauchwasser
- DHW -: warmes Brauchwasser
- CHO -: heißes Heizmedium, Heizmediumzufuhr
- CHR -: kaltes Heizmedium, Heizmediumrückfluss
- T_{ref} -: Solltemperatur
- T_{DHW} -: Temperatur des erwärmten Brauchwassers
- T_{DCW} -: Temperatur des kalten Brauchwassers
- T_{CHin} -: Temperatur des Heizmediums
- Q_{DHW} -: Brauchwasservolumenstrom
- Q_{CH} -: Heizmediumvolumenstrom
- ΔT -: Regeldifferenz
- ω_{ref} -: Solldrehzahl

## Patentansprüche

1. Brauchwassererwärmungseinheit (2), welche vorgesehen ist zur Verwendung in einer Heizungsanlage, mit zumindest einem Wärmetauscher (6), welcher ein Plattenwärmetauscher ist und einen ersten Strömungsweg (10) für ein Heizmedium und einen zweiten Strömungsweg (12) für zu erwärmendes Brauchwasser aufweist, sowie mit einer Umwälzpumpe (46) für das Heizmedium, **dadurch gekennzeichnet, dass**
die beiden Strömungswege (10, 12) relativ zueinander in einem ersten Abschnitt (A) in einer Gegenstrom-Anordnung mit entgegengesetzt gerichteten Strömungsrichtungen und in einem sich in Strömungsrichtung des Brauchwassers gesehen stromabwärts anschließenden zweiten Abschnitt (B) in einer Mitstrom-Anordnung mit gleich gerichteten Strömungsrichtungen geführt sind.

2. Brauchwassererwärmungseinheit (2) nach Anspruch 1, **dadurch gekennzeichnet, dass** der erste Abschnitt (A) zwischen 50 % und 80 % und bevorzugt zwischen 65 % und 75 % der Länge des zweiten Strömungsweges ausmacht.

3. Brauchwassererwärmungseinheit (2) nach einem der vorangehenden Ansprüche, **dadurch gekennzeichnet, dass** sie zumindest zwei miteinander verbundene Wärmetauscher aufweist, wobei der erste Abschnitt (A) der Strömungswege (10, 12) in einem der Wärmetauscher und der zweite Abschnitt (B) der Strömungswege (10, 12) in dem anderen der Wärmetauscher ausgebildet sind.

4. Brauchwassererwärmungseinheit (2) nach einem der vorangehenden Ansprüche, **dadurch gekennzeichnet, dass** zwischen dem ersten (A) und dem zweiten (B) Abschnitt in dem Wärmetauscher (6) ein Umkehrabschnitt (C) ausgebildet ist, in welchem der erste (10) und/oder der zweite (12) Strömungsweg so verläuft, dass eine Richtungsumkehr relativ zu dem jeweils anderen Strömungsweg (10, 12) von Gegenstrom zu Mitstrom gegeben ist.

5. Brauchwassererwärmungseinheit (2) nach einem der vorangehenden Ansprüche, **dadurch gekennzeichnet, dass** die Umwälzpumpe (46) an dem Wärmetauscher (6) befestigt ist.

6. Brauchwassererwärmungseinheit (2) nach einem der vorangehenden Ansprüche, **dadurch gekennzeichnet, dass** der Wärmetauscher (6) an zumindest einem Ein- oder Ausgang (20) des ersten (10) und/oder zweiten (12) Strömungsweges eine Anschlussarmatur (26) zur Verbindung mit einer Anschlussleitung aufweist.

7. Brauchwassererwärmungseinheit (2) nach Anspruch 6, **dadurch gekennzeichnet, dass** in der Anschlussarmatur (26) ein Temperatur- und/oder Strömungssensor (98) angeordnet ist.

8. Brauchwassererwärmungseinheit (2) nach Anspruch 6 oder 7, **dadurch gekennzeichnet, dass** die Anschlussarmatur (26) mit der Umwälzpumpe (46) für das Heizmedium verbunden ist.

9. Brauchwassererwärmungseinheit (2) nach einem der vorangehenden Ansprüche, **gekennzeichnet durch** Befestigungselemente (106), welche zur Anbringung der Brauchwassererwärmungseinheit (2) an einem Heizkessel oder Wasserspeicher (4) ausgebildet sind.

## Claims

1. A service water heating unit (2) which is provided for use in a heating installation, with at least one heat exchanger (6) which is a plate heat exchanger and comprises a first flow path (10) for a heating medium and a second flow path (12) for service water to be heated, as well as with a circulation pump (46) for the heating medium,
**characterised in that**
the two flows paths (10, 12) relative to one another in a first section (A) are led in a counterflow arrangement with oppositely directed flow directions, and in a second section (B) which connects downstream seen in the flow direction of the service water are led in a co-flow arrangement with equally directed flow directions.

2. A service water heating unit (2) according to claim 1, **characterised in that** the first section (A) makes up between 50% and 80% and preferably between 65% and 75% of the length of the second flow path.

3. A service water heating unit (2) according to one of the preceding claims, **characterised in that** it comprises at least two heat exchangers which are connected to one another, wherein the first section (A) of the flow paths (10, 12) is formed in one of the heat exchangers and the second section (B) of the flow paths (10, 12) is formed in the other of the heat exchangers.

4. A service water heating unit (2) according to one of the preceding claims, **characterised in that** a reversal section (C) is formed in the heat exchanger (6) between the first (A) and the second (B) section, in which reversal section the first (10) and/or the second (12) flow path runs such that a direction reversal relative to the respective other flow path (10, 12) from counterflow to co-flow is given.

5. A service water heating unit (2) according to one of the preceding claims, **characterised in that** the circulation pump (46) is fastened on the heat exchanger (6).

6. A service water heating unit (2) according to one of the preceding claims, **characterised in that** the heat exchanger (6) at least at one entry or exit (20) of the first (10) and/or second (12) flow path comprises a connection fitting (26) for connection to a connection conduit.

7. A service water heating unit (2) according to claim 6, **characterised in that** a temperature and/or flow sensor (98) is arranged in the connection fitting (26).

8. A service water heating unit (2) according to claim 6 or 7, **characterised in that** the connection fitting (26) is connected to the circulation pump (46) for the heating medium.

9. A service water heating unit (2) according to one of the preceding claims, **characterised by** fastening elements (106) which are designed for attachment of the service water heating unit (2) on a heating boiler or water storage (4).

## Revendications

1. Unité de chauffage d'eau domestique (2) prévue pour être utilisée
dans une installation de chauffage, comprenant au moins un échangeur de chaleur (6) qui est un échangeur de chaleur à plaques, une première voie d'écoulement (10) pour un milieu de chauffage et une seconde voie d'écoulement (12) pour l'eau domestique à chauffer, ainsi qu'une pompe de circulation (46) pour le milieu de chauffage,
**caractérisée en ce que**,
dans une première partie (A), les deux voies d'écoulement (10, 12) sont dirigées l'une par rapport à l'autre dans une disposition à contre-courant avec des directions d'écoulement orientées en sens inverse, et, dans une seconde partie (B), qui se raccorde en aval, vu dans la direction d'écoulement de l'eau domestique, dans une disposition à courants parallèles, avec des directions d'écoulement orientées dans le même sens.

2. Unité de chauffage d'eau domestique (2) selon la revendication 1,
**caractérisée en ce que** la première partie (A) représente entre 50 % et 80 %, et de préférence entre 65 % et 75 %, de la longueur de la seconde voie d'écoulement.

3. Unité de chauffage d'eau domestique (2) selon l'une des revendications précédentes, **caractérisée en ce qu'**elle présente au moins deux échangeurs de chaleur reliés l'un à l'autre, la première partie (A) des voies d'écoulement (10, 12) étant formée dans l'un des échangeurs de chaleur et la seconde partie (B) des voies d'écoulement (10, 12) dans l'autre échangeur de chaleur.

4. Unité de chauffage d'eau domestique (2) selon l'une des revendications précédentes, **caractérisée en ce que**, dans l'échangeur de chaleur (6), est formée entre la première partie (A) et la seconde partie (B), une partie de renvoi (C) dans laquelle la première voie d'écoulement (10) et/ou la seconde voie d'écoulement (12) s'étend ou s'étendent de telle sorte qu'il se produit à chaque fois un renversement de direction par rapport à l'autre voie d'écoulement (10, 12), pour passer du contre-courant au cocourant.

5. Unité de chauffage d'eau domestique (2) selon l'une des revendications précédentes, **caractérisée en ce que** la pompe de circulation (46) est fixée à l'échangeur de chaleur (6).

6. Unité de chauffage d'eau domestique (2) selon l'une des revendications précédentes, **caractérisée en ce que** l'échangeur de chaleur (6) présente, à au moins une entrée ou sortie (20) de la première voie d'écoulement (10) et/ou de la seconde voie d'écoulement (12), un appareil de robinetterie de raccordement (26) prévu pour la liaison avec une conduite de raccordement.

7. Unité de chauffage d'eau domestique (2) selon la revendication 6, **caractérisée en ce que**, dans l'appareil de robinetterie de raccordement (26), est monté un capteur de température et/ou de débit (98).

8. Unité de chauffage d'eau domestique (2) selon la revendication 6 ou 7, **caractérisée en ce que** l'appareil de robinetterie de raccordement (26) est relié à la pompe de circulation (46) prévue pour le milieu de chauffage.

9. Unité de chauffage d'eau domestique (2) selon l'une des revendications précédentes, **caractérisée par** des éléments de fixation (106) qui sont conçus pour attacher l'unité de chauffage d'eau domestique (2) à une chaudière de chauffage ou à un réservoir d'eau (4).
